# EUROPEAN PATENT APPLICATION

(11) **EP 1 610 406 A1**
(43) Date of publication of application: **28.12.2005**
(21) Application number: 04253863.7
(22) Date of filing: 26.06.2004
(51) Int. Cl.: H01M 8/04, H01M 8/24

(54) **Power supply**

(71) Applicant: Nokia Corporation, 02150 Espoo (FI)
(72) Inventor: Paananen, Heikki, Tokyo (JP); Hashizume, Kenichi, Gumna (JP); Nakade, Shogo, Tokyo (JP); Fujii, Takaharu, Kanagawa (JP)
(74) Representative: Higgin, Paul

(57) **Abstract**

A power supply is formed from a number of fuel cell elements (21, 22, 23; 31; 41) connected to a switch (SW1) to enable the number of elements operational in a fuel cell stack to be varied in order to sustain output voltage despite variations in the output load current. Typically, the output current is monitored to allow incremental adjustment by switching combinations of the fuel cell elements. The fuel cell elements themselves may be single fuel cells or groups of fuel cells connected in series or in parallel.

## Description

The present invention relates to power supply and more particularly to electrical power supply for portable hand held devices such as mobile communication equipment or mobile phones.

Clearly, electrical power is required to drive electronic equipment and when that equipment is portable then so must the power supply. Thus, it is known to use electrical batteries, which may be rechargeable, in order to provide electrical power. Unfortunately, batteries are potentially hazardous to the environment and so other technologies are being actively investigated to provide a more acceptable alternative.

One technology which has significant advantages is that of a fuel cell and in particular hydrogen and oxygen fuel cells where these gases are consumed to provide electricity and water as product. Other fuel cell types are known but may not be as acceptable for small portable electronic devices. Thus, hydrogen and oxygen fuel cells are the prominent technology for mobile devices due to their relatively high capacity and environmentally friendly by-product waste, that is to say water. However, in order to be compatible with existing electronic devices these fuel cells need to have compatible electrical specifications to present energy sources (batteries).

One problem of fuel cells is that their output resistance is relatively high. Thus, output voltage drops rapidly as output current increases and so the output voltage of a fuel cell varies widely dependent upon output (load) current. Typically, that variation is a straight line depreciation. Additionally, both output voltage and current can vary with efficiency of hydrogen consumption. Generally, fuel economy, that is to say hydrogen consumed by combination with oxygen, will increase when fuel cell operating conditions are not optimised. Thus, it is difficult to control output voltage and current simply by controlling fuel insertion rate. It will also be understood there can be problems with fuel cell stacking to generate the desired output voltage or current.

These problems are particularly difficult with regard to relatively small mobile communication devices where the power requirements may widely vary from an operating mode requiring several Watts to a standby mode when the power requirement may be negligible. Thus, either the fuel cell is operated continuously at its highest efficiency irrespective of the actual present requirements with the excess stored in a relatively large battery or the if the fuel cell has an optimum operating condition at the standby mode then there will not be sufficient power for the operating mode.

In view of the above a number of relatively sophisticated approaches have been taken to match electrical power generated by the fuel cell and the current power requirements. These approaches have particularly related to automotive applications and generally relate to adjusting fuel supply or using a battery as a regulator or adjusting operating temperatures. All this approaches either undermine the basic advantages of fuel cells or are relatively cumbersome for the control advantage attained. Furthermore, these approaches are generally not appropriate for hand portable devices.

In accordance with the present invention there is provided a power supply as defined in claim 1 below.

Preferred features of the present invention are outlined in the dependent claims defined below.

Also in accordance with the present invention there is provided a method of operation a power supply as defined in claim 12.

Embodiments of the present invention will now be described by way of example only with reference to the accompanying drawings in which:-
Fig. 1 is a graphic representation of a typical fuel cell response with respect to output voltage in comparison with output current;
Fig. 2 is a schematic representation of a power supply arrangement in accordance with the present invention;
Fig. 3 is a schematic representation of a power supply arrangement associated with an electronic consuming device;
Fig. 4 is a schematic representation of a power supply module in accordance with the present invention;
Fig. 5 is a graphic representation of output voltage compared to output current for a power supply arrangement in accordance with the present invention where three fuel cells are all connected in series; and,
Fig. 6 is a graphic representation of output voltage compared to output current for a power supply arrangement in accordance with the present invention with some fuel cell elements in series comprising a number of fuel cells in parallel with each other.

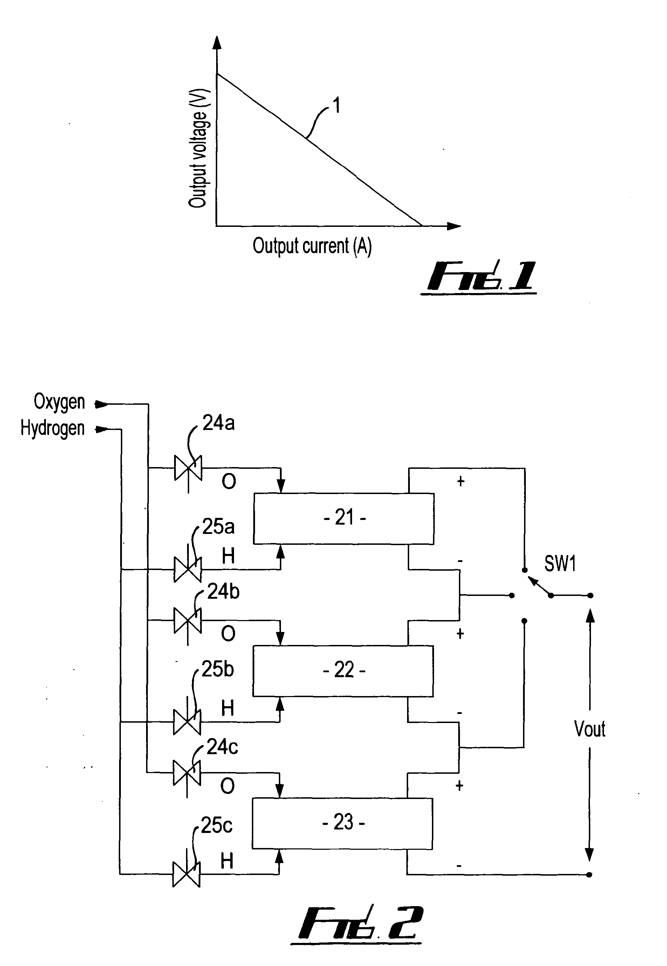

As indicated above although fuel cells have advantages a clear drawback is the radical variation in output voltage as the output load current increases. Fig. 1 provides a graphic representation of that variation. Thus, as load current increases output voltage drops in a substantially straight line 1. This response is substantially the same for most fuel cells although the actual response profile may be different for each fuel cell type, configuration and age, etc.

Clearly, such variation in the output voltage is unacceptable for consistency of electronic device operation. It will be understood that DC-DC converters are utilised to provide regulation of electronics. Wide variations in input voltage lead to inefficient operation of the DC-DC converter.

There is a desire to provide greater consistency with regard to the output voltage delivered by a fuel cell power supply to the DC-DC converter whilst also facilitating miniaturisation, efficiency and extended power supply life.

If the output voltage of one fuel cell is x volts then if n fuel cells are connected in series, that is to say lower cell positive connected to upper cell negative then the output voltage is x times that number n of fuel cells when measured between the lowest cells negative contact and the topmost cell positive contact. However, as indicated above the output voltage of a cell changes with output current. Thus, in order to provide some degree of output voltage stability the number of fuel cells effective in a stack must be changed into and out of operation dependent upon load current requirements. The number required will be given by (required output voltage) divided by (output voltage of one cell). Thus, if the output voltage drops by half with load current then double the number of fuel cells will be required to sustain that output voltage necessary for efficient operation of the DC-DC converter etc if all the fuel cells are the same.

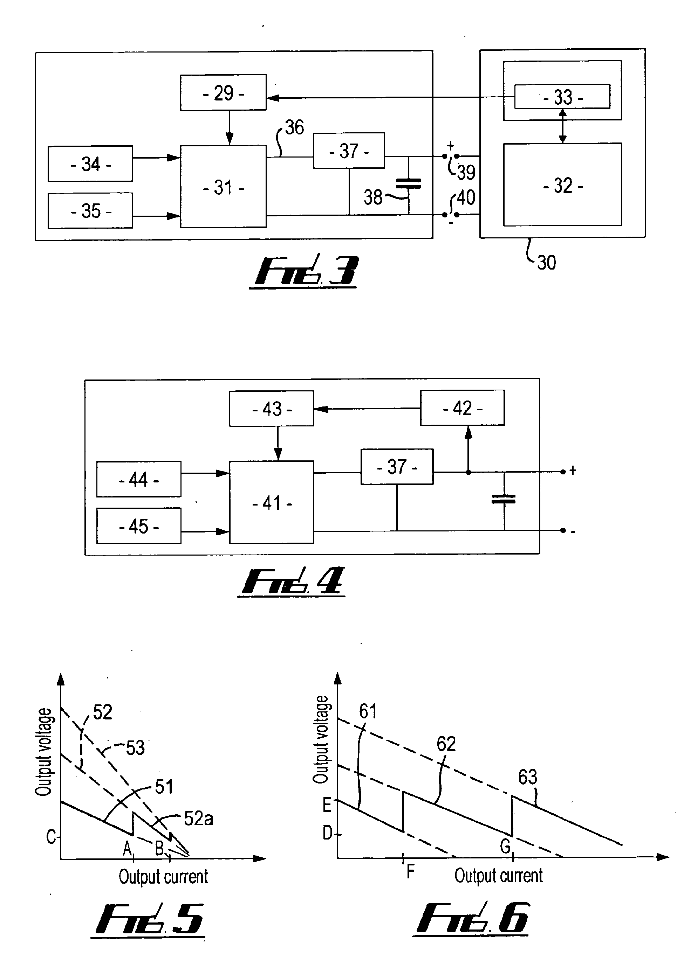

Fig. 2 provides a schematic illustration of a fuel cell stack in which individual fuel cells or elements formed of several fuel cells are connected in series as described above. Thus, in accordance with known operation, each fuel cell 21, 22, 23 receives oxygen and hydrogen through respective regulating valves 24, 25. Within the cells 21, 22, 23 the hydrogen is consumed by the oxygen to form water and electrical power. The cells are connected in series with positive and negatives appropriately coupled in a stack.

At each coupling between fuel cells a connector is provided to a switch SW1 which in the embodiment depicted has three throw or pole position corresponding to one, two or three fuel cell being connected into the series to provide an output voltage Vout from the switch SW1. Thus, the switch SW1 is utilised to sustain the output voltage Vout as the output current varies. If the output current increase then more cells 22, 23 are coupled into the power supply stack to compensate for the fall in output voltage whilst if the output current decreases then the number of cells 22, 23 coupled in the active stack may be reduced for efficiency. Normally, there will be more than three cells or fuel cell elements made up of a number of fuel cells but only three are described for simplicity and clarity.

Clearly, although the switch SW1 could be a 'manual' switch thrown with changes in electronic device status, that is to say at mode changes from standby to other status levels it will be understood that more normally a controller will be used to monitor load current and so adjust by feed back control the number of cells in the stack in response. Fig. 3 provides a schematic illustration of a possible power supply arrangement and electronic consumer device in accordance with the invention.

A fuel cell stack 31 as described previously comprises a number of fuel cell elements arranged in series. These fuel cells are feed oxygen 34 and hydrogen 35 in order to generate electricity in an unregulated flow 36 to a DC-DC converter 37 where by action of that converter 37 and a ballast capacitor 38 electrical power is provided across terminals 39, 40.

The terminals 39, 40 are coupled in use to an electronic consumer device 30, such as a portable communications device or mobile phone, to provide electrical power. The device 30 includes the main operating system circuitry 32 and, of particular importance with regard to the present invention, a monitor 33 which as part of a control arrangement determines output load current consumed by the device 30. Thus, a fuel stack controller 29 receives signals indicative of that load current and so alters the switch (not shown but compare with SW1 in Fig. 2) in order to adjust the number of fuel cell elements operational in the stack 31 in order to sustain the output voltage presented to the converter 37 and so to the device 30. In such circumstances, the power supply arrangement depicted in Fig. 3 is dependent upon the device 30 for monitoring output load current.

In Fig. 4 a similar power supply arrangement to that depicted in Fig. 3 is schematically illustrated but a monitor for monitoring output current is provided within the arrangement itself rather than as part of the consumer electronic device. Thus, a fuel cell stack 41 again receives oxygen 44 and hydrogen 45 to generate electricity which is initially unregulated as delivered to a DC-DC converter 47. The converter 47 provides an electrical voltage across terminals 49, 50 which can be connected to a consuming electrical device (not shown). The monitor 42 is coupled to the output of the converter 47 in order to monitor output load current when the arrangement is operational. The monitor 42 acts in a control loop with a stack controller 43 in order to alter the number of fuel cell elements necessary in the stack 41 to sustain output voltage despite variations in output load current.

In view of the above it will be appreciated that by varying the number of fuel cell elements switched into a series stack that the voltage output can be sustained. The width of the range window or degree of coarseness of maintenance of the output voltage is dependent upon the number of fuel cell elements in switching series and their response profile of output voltage to output current. In the embodiment depicted in Fig. 2 there are three fuel cell elements. Larger numbers of fuel cell elements may provide for greater incremental changes in order to more closely sustain a desired output voltage.

Fig. 4 provides a graphic illustration for a three fuel cell stack of the response profile of output voltage against output current. As indicated the objective should be to sustain output voltage against output current for efficient operation. With a three fuel cell arrangement the options are to have one, two or three cells operational. Thus, as described previously these cells can combine to create output voltages depicted by lines 51, 52, 53 representing one cell, two cells or three cells respectively. Thus, in accordance with the present invention to sustain output voltage initially only one cell is switched into operation in the stack. This is equivalent to the first part of line 51. Once the output current has attained a value given at point A then a second cell is switched into the stack so that there are two fuel cells elements providing the electrical power and the power supply arrangement follows the intermediate part 52a of the two element line 52 described previously. Finally, once the output current requirement has reached a value B a third fuel cell element is switched into the stack and the power supply arrangement follows the later part 53a of the line 53 representative of three fuel cells in series. By such an approach a minimum output voltage valve C is sustained for a longer period of time.

Although selective switching of a number of fuel cell elements as described above sustains the output voltage it will be noted that such maintenance of the desired output voltage value is relatively coarse. An alternative is to provide asymmetric serial fuel cell stacks by having fuel cell elements arranged in parallel groupings. Thus, for example, a first fuel cell element my comprise a single cell of chosen electrical characteristics, a second fuel cell element of the stack may comprise a parallel coupled pair of fuel cells and a third fuel cell element of the stack comprises three fuel cells connected in parallel with each other. Thus, the supportive effect of switching these elements into the stack dependent upon output current may provide for sustaining the output voltage more accurately, that is to say over a narrow range window.

Fig. 5 illustrates the response profile for such an arrangement of parallel fuel cells as fuel cell elements in a switchable stack. Thus, lines 61, 62, 63 represent the combined series coupling of fuel cell elements formed from parallel group combinations of two and three fuel cells with a single primary cell. The lines 62, 63 decay with output load current less rapidly than a single fuel cell element. Thus, as can be seen the output voltage can be kept with a narrower range D to E by switching the fuel cell elements judiciously into the stack as required upon attainment of certain output load currents.

Initially, the single fuel cell element is switched into the stack and the response profile is that depicted by line 61. Once an output load current reaches F then the second fuel cell element formed by two fuel cells in parallel is switched into the stack and the response profile will be that depicted as line 62. Once an output load current G is required then the third fuel cell element formed by three fuel cells in parallel is switched into the stack and the profile follows line 63.

It is switching of the serially coupled fuel cell elements in the stack dependent upon monitored or expected output current which enables the present power supply arrangement to sustain output voltage. As indicated the number of fuel cell elements in the stack may be far greater than two with a greater number providing a more accurate response profile to output load current. Furthermore, the response of each fuel cell element may be different by virtue of parallel combination or simply size of fuel cell constituting that serially coupled element.

It will be understood that a stack of fuel cell elements in series is required to provide the switchable variation to compensate for output current increases. The series composition of those elements may be different. Thus, as indicated there may be simply one cell or parallel cells used as the serially coupled fuel cell elements. Furthermore, provided an appropriate switching network is utilised it may be possible to provide actively variable combinations for both the composition of the fuel cell elements serially connected as well as the serial connections themselves within a particular element, in order to provide the best response in view of the output current requirements as well as fuel cell aging, or environmental changes due to temperature or other factors such as spreading duty cycling to each cell and so potentially extending their operational lives etc.

The switching of the stack is generally incremental so the output voltage is sustained in a window range defined by the response profile drop of the output voltage against output current between each switching stage of serial connection of the fuel cell stack. Nevertheless, output voltage is sustained above a minimum and within the window range allows more predictable operation.

It will be understood that dependent upon output current the number of active fuel cells in the stack will vary. In order to accommodate those variations the valves 24, 25 (Fig. 2) will be used to cut supply of oxygen and hydrogen to non-active cells as required.

To operate fuel cells in an efficient way it is better to operate the fuel cell at around half the open circuit voltage of the cell. Thus, it is better if controlling the output voltage of fuel cells can be done not only by the number of cells in series but also by the number of cells in parallel as described above with regard to Fig. 6. This gives a more consistent range window for the output voltage as the number of switched cell elements in the stack increases both in parallel and in series simultaneously as the required output load current increases.

Operating a power supply arrangement as described above is generally as indicated through a controller utilising an algorithm based upon output load current condition. For example, the stack controller will normally be coupled to an MPU and/or performance monitor by a bus connector to constantly monitor system condition an/or predict load requirements and so control fuel cell operation according to a pre-determined power supply algorithm. As shown above, control may be built into the supply arrangement (Fig. 4) or be through feed-back from the consuming electronic device.

Whilst endeavouring in the foregoing specification to draw attention to the those features of the invention believed to be of particular importance, it should be understood that the Applicant claims protection in respect of any patentable feature or combination of features hereinbefore referred to and/or shown in the drawings, whether of not particular emphasis has been placed thereon.

## Claims

1. A power supply for a portable electronic device, the supply comprising a plurality of fuel cell elements (21, 22, 23; 31; 41) connected in series to form a fuel cell stack **characterised in that** there is a switch (SW1) connected to each fuel cell element to allow selective combination of the fuel cell elements to sustain output voltage for the power supply despite variation in output electrical current drawn from the power supply.

2. A supply as claimed in claim 1 wherein there is control means (29; 43) to monitor output current and/or output voltage and coupled to the switch to alter the combination of fuel cell elements as required to sustain output voltage.

3. A supply as claimed in claim 1 or claim 2 wherein the switch ensures the output voltage is sustained above a desired value.

4. A supply as claimed in any of claims 1, 2 or 3 wherein the switch ensures that the output voltage is sustained in a desired value window range.

5. A supply as claimed in any preceding claim wherein at least some of the fuel cell elements comprise a plurality of fuel cells in a parallel connection relationship with each other.

6. A supply as claimed in any preceding claim wherein each fuel cell has a regulated supply valve (24, 25) for adjusting the rate of supply of a consumable to the fuel cell in order to adjust output voltage and operation dependent upon output voltage requirements.

7. A supply as claimed in any preceding claim wherein the fuel cells are of a hydrogen and oxygen type.

8. A supply as claimed in any preceding claim wherein each fuel cell element in series has substantially the same electrical characteristics.

9. A supply as claimed in any preceding claim wherein each fuel cell within each fuel cell element has substantially the same electrical characteristics.

10. A supply as claimed in any preceding claim wherein fuel cells with a fuel cell element are connected in parallel with each other.

11. A supply as claimed in any preceding claim wherein each fuel cell is individually connected to the switch in order to allow the fuel cell elements to be selectively associated to form fuel cell elements in the series connected fuel cell stack.

12. A method of operating a power supply comprising a plurality of fuel cell (21, 22, 23; 31; 41) elements coupled in a serially connected fuel cell stack wherein the fuel cell elements at incrementally switched together dependent upon output load current requirements to substantially sustain output voltage.
